(19) Europäisches Patentamt
European Patent Office
Office européen des brevets

(11) **EP 3 977 690 B1**

(12) **EUROPEAN PATENT SPECIFICATION**

(45) Date of publication and mention
of the grant of the patent:
**06.08.2025 Bulletin 2025/32**

(21) Application number: **19734051.6**

(22) Date of filing: **25.06.2019**

(51) International Patent Classification (IPC):
*H04L 47/125* (2022.01)   *H04L 47/2441* (2022.01)
*H04L 47/2483* (2022.01)   *H04L 49/00* (2022.01)
*H04L 49/50* (2022.01)

(52) Cooperative Patent Classification (CPC):
**H04L 47/125; H04L 47/2441; H04L 47/2483;
H04L 49/30; H04L 49/50**

(86) International application number:
**PCT/EP2019/066821**

(87) International publication number:
**WO 2020/259807 (30.12.2020 Gazette 2020/53)**

(54) **DEVICE AND METHOD FOR IMPROVED LOAD BALANCING WITH LIMITED FORWARDING RULES IN SOFTWARE DEFINED NETWORKS**

VORRICHTUNG UND VERFAHREN ZUM VERBESSERTEN LASTAUSGLEICH MIT BEGRENZTEN WEITERLEITUNGSREGELN IN SOFTWARE-DEFINIERTEN NETZWERKEN

DISPOSITIF ET PROCÉDÉ D'ÉQUILIBRAGE DE CHARGES AMÉLIORÉ AVEC RÈGLES DE TRANSFERT LIMITÉES DANS DES RÉSEAUX DÉFINIS PAR LOGICIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.04.2022 Bulletin 2022/14**

(73) Proprietor: **Huawei Technologies Co., Ltd.
Shenzhen, Guangdong 518129 (CN)**

(72) Inventors:
• **MEDAGLIANI, Paolo**
  **80992 Munich (DE)**
• **ZHAO, Jinhua**
  **80992 Munich (DE)**
• **ZHANG, Jie**
  **80992 Munich (DE)**
• **LEGUAY, Jeremie**
  **80992 Munich (DE)**

(74) Representative: **Grünecker Patent- und
Rechtsanwälte
PartG mbB
Leopoldstraße 4
80802 München (DE)**

(56) References cited:
CN-A- 107 579 923   US-A1- 2006 221 974
US-A1- 2009 193 105   US-A1- 2012 287 789
US-A1- 2017 230 065   US-B1- 6 473 424

**Description**

TECHNICAL FIELD

The present disclosure relates to a method and device for forwarding data ports in a network.

BACKGROUND

Software-defined networking (SDN) technology is an approach to network management that enables dynamic, programmatically efficient network configuration in order to improve network performance and monitoring. SDN is meant to address the fact that the static architecture of traditional networks is decentralized and complex while current networks require more flexibility and easy troubleshooting. SDN attempts to centralize network intelligence in one network component by disassociating the forwarding process of network packets (data plane) from the routing process (control plane) while the control plane consists of one or more controllers.

Load balancing plays a crucial role in improving network utilization. The main idea is to split traffic over multiple paths in order to make a better use of network capacity. Traffic in such networks is commonly organized in flows, which can be defined as a host-to-host communication path, or a socket-to-socket communication identified by a unique combination of source and destination addresses (for instance, IP or MAC addresses) and port numbers, together with transport protocols (for example, UDP or TCP) or any other identifiers. Commonly, flows are grouped into macroflows (also called traffic aggregates or flow aggregates) and microflows. Macroflows may be defined by their source and destination and can be subdivided into microflows which are defined by finer granulate identifiers, such as particular service or quality of service and/or priority. For example, microflows can be the finest granulate flows possible (i.e., unitary TCP flows) and can not be split further as they would introduce packet reordering issues. Macroflows are composites of microflows and can be split in several subflows that can be routed over different paths. In general any kind of flow or flow aggregate can be called flow.

US2009/193105 A1 describes a network device performing load balancing of large flows on the output interfaces. US2012/287789 A1 describes monitoring port utilisation and modifying one or more flow entries to direct flows to a different port.

Nowadays, network controllers like, for instance, Software-Defined Networking (SDN) controllers or Path Computation Elements (PCE) integrate traffic engineering methods to continuously optimize routing and load balancing. These centralized control plane entities leverage on a global view of the network to decide whether it is necessary to split flows and the most efficient way to do it, given the statistic on network load and traffic flows.

SUMMARY

Embodiments of the present invention provide apparatuses and methods for effectively forwarding data in networks like Software-Defined Networks (SDNs). The forwarding network devices can detect load imbalance issues and adapt load balancing to real traffic conditions. Adaptation is made locally in priority and by the network controller when needed. Furthermore, the adaption focuses on problematic flows (the ones at the root of the imbalance issue) so that a limited amount of additional forwarding rules is used.

The foregoing and other objects are achieved by the subject matter of the independent claims. Further implementation forms are apparent from the dependent claims, the description and the figures.

A claimed embodiment of the invention provides a network device for forwarding traffic with a plurality of output ports, comprising: a storage system storing forwarding rules including a first rule for forwarding packets of flows of an aggregated flow according to a given flow distribution to the output ports; a circuitry configured to: - in a case where the load on a first output port does not match a target load for the first output port, exclude at least one of the flows from the aggregated flow and modify said stored forwarding rules by establishing a second rule associating the at least one of the flows of the aggregated flow with a second output port so as to improve the match between the target load and the load on the first output port; and - perform routing according to the stored forwarding rules, wherein the load on the first output port is a measured load or a predicted load. The circuitry of the network device is further configured to predict a future load on the output ports; in a case where the predicted future load on the first output port does not match the target load for the first output port, identify the at least one of the flows with the heaviest future load among the flows of the aggregated flow forwarded to the first output port according to the flow forwarding rules; and associate said identified flow to the second output port.

Another claimed embodiment of the invention provides a method for forwarding traffic in a network device with a plurality of output ports, comprising: storing forwarding rules including a first rule for forwarding packets of flows of an aggregated flow according to a given flow distribution to the output ports; in a case where the load on a first output port does not match a target load for the first output port, excluding at least one of the flows from the aggregated flow and modifying said stored forwarding rules by establishing a second rule associating the at least one of the flows of the aggregated flow with a second output port so as to improve the match between the target load and the load on the first output port; and performing routing according to the stored forwarding rules; wherein the load on the first output port is a measured load or a predicted load. The method further comprises predicting a future load on the output ports; in a case where the predicted future load on the first output port does not match the target load for the first output port, identify the at least one of the flows with the heaviest future load among the flows of the aggregated flow forwarded to the first output port according to the flow forwarding rules and associate said identified flow to the second output port.

Various aspects of the present disclosure are described as follows.

According to a first aspect, a network device (100) for forwarding traffic with a plurality of output ports (120-1 to 120-N) is provided, comprising a storage system (101) storing forwarding rules including a first rule for forwarding packets of flows of an aggregated flow according to a given flow distribution to the output ports and a circuitry (110) configured to, in a case where the load on a first output port (120-N) does not match a target load for the first port, exclude at least one of the flows from the aggregated flow and modify said stored forwarding rules by establishing a second rule associating the at least one of the flows of the aggregated flow with a second output port (120-1) so as to improve the match between the target load and the load on the first output port, and perform routing according to the stored forwarding rules. A network device according to this aspect can change the routing of flows locally without need for a global reconfiguration of the network. This may, for instance, allow a faster reaction to load imbalance issues.

According to a second aspect, the network device (500) according to the first aspect is provided, wherein the circuitry (510) is configured to observe the load on the output ports (520-1 to 520-N), and in a case where the load on the first output port (520-N) does not match the target load for the first port (520-N), identify the flow (550-1) with the heaviest load among the flows (550-1 to 550-N) forwarded to the first output port (520-N) according to the flow forwarding rules and associate said identified flow (550-1) to the second output port (520-1). A network device according to this aspect can detect load imbalance issues on the output ports and resolve the load imbalance issues locally without need for a global reconfiguration of the network. This may, for instance, allow a faster load balancing.

According to a third aspect, the network device (500) according to the first or second aspect is provided, wherein the circuitry is configured to predict the future load on the output ports (520-1 to 520-N), and in a case where the future load on the first output port (520-N) does not match the target load for the first port (520-N), identify the flow (550-1) with the heaviest future load among the flows (550-1 to 550-N) forwarded to the first output port (520-N) according to the flow forwarding rules, and associate said identified flow (550-1) to the second output port (520-1). A network device according to this aspect may allow local load balancing anticipating the expected future load. In case a flow is expected to be very large in future, it may be forwarded such that no load balancing issue arises on the corresponding output port.

According to a fourth aspect, the network device (500) according to any of the first to third aspect is provided wherein the circuitry (510) is further configured to, in a case where the load or predicted load (701) on the first output port (750) does not match the target load (702) for the first port, identify a set (720) of the largest flows forwarded to the first output port, wherein the number of flows in the set (720) is chosen such that if one more flow was added to the set (720) of flows, the total data rate of the flows of the set of flows would be larger than the difference between the load or predicted load (701) and the target load (702), and assign said identified flows to one or more output ports other than the first output port (750). A network device according to this aspect may allow to effectively resolve load balancing issues locally. As only the largest flows are considered to be forwarded to different output ports, this may make it possible to reconfigure the network locally with a small number of new rules (which may make efficient use of the local storage for forwarding rules) and with a small local computational demand.

According to a fifth aspect, the network device (100) according to any of the first to fourth aspect is provided, wherein the first rule and the second rule are stored in a forwarding table (801), wherein the forwarding table (801) stores forwarding rules which are either rules redirecting an input flow to the group table (821) or rules (822) associating an input flow with an output port, and each redirecting forwarding rule (821) is defined by a group table pointed to by the entry of the redirecting forwarding rule (821) in the forwarding table. A network device according to this aspect may allow to effectively resolve load balancing issues locally. For traffic that does not cause load balance issues on the output ports, group tables may be used, which may provide an efficient way of forwarding large amounts of data (and potentially well distributed over the output ports) with only a limited use of rules. For large and/or problematic flows, rules associating the flows with output ports may be used. This may allow to provide an effective forwarding while fast and locally resolving load imbalance issues.

According to a sixth aspect, a networking device (100) according to the fifth aspect is provided, wherein the forwarding table (801) and the group table are stored in a Ternary Content Access Memory, TCAM. A network device according to this aspect may provide a fast and effective forwarding potentially making a fast execution of the described functionalities possible.

According to a seventh aspect, a network device (100) according to the fifth or sixth aspect is provided, wherein in the assigning of a flow to the second output port, the second forwarding rule is added to the forwarding table (801). A network device according to this aspect may efficiently resolve load balance issues by using tailored rules associating a flow with an output port.

According to an eighth aspect, a network device (100) according to any of the first to seventh aspect is provided comprising an interface (150) to a controller

wherein the circuitry (110) is configured to receive, over said interface, a target split ratio specifying for the output ports, the respective target loads; and/or said forwarding rules. A network device according to this aspect may allow to effectively forward traffic in accordance with a central controller while potentially being able to efficiently resolve imbalance issues locally.

According to a ninth aspect, a network device (100) according to the eighth aspect is provided wherein the circuitry (110) is configured to transmit a request to the controller over said interface, and request the controller to provide the network device with one or more new or updated forwarding rules. A network device according to this aspect may make it possible to resolve load balance issues in cases where the issue cannot be solved locally. The controller might reconfigure the network globally in such a case. The network device might only send such a request to the network controller if the load balance issue cannot be solved locally. A local solution may be faster and more efficient, while the global solution night be able to solve more severe load imbalance issues.

According to a tenth aspect, a network device (100) according to the ninth aspect is provided, wherein the request contains at least one of a notification of the load on the first output port not matching the target load for the first port, information on the TCAM utilization and/or the number of rules added locally, information on the deviation from the target load on each port, a list of flows the network device associated with another port than the first port. A network device according to this aspect may contribute to the network controller more efficiently finding a potentially more efficient solution to a load imbalance issue.

According to an eleventh aspect, a network device (100) according to any of the first to tenth aspect is provided wherein the modification of the forwarding rules (820) is chosen such that the deviation of the load or predicted load from the target load on the output port is minimized.

According to a twelfth aspect, a network device according to any of the first to eleventh aspect is provided wherein in the improving of the match between the load or predicted load and the target load on the output ports a Variable Sized Bin Packing Problem, VSBPP, algorithm is used after removing the flow(s) identified as having the highest load. A network device according to this aspect may more efficiently find a solution for a load imbalance issue.

According to a thirteenth aspect, a network device (100) according to any of the first to twelfth aspect is provided wherein the target load per port (120-1 to 120-N) is determined from the forwarding rules (820) received from a control node. A network device according to this aspect may find the target load for the output ports without additional communication.

According to a fourteenth aspect, a network device (100) according to any of the first to thirteenth aspect is provided wherein the stored forwarding rules (820) include a rule for forwarding packets of sub-aggregated flows of an aggregated flow, and in a case where the load or predicted load on a first output port (120-N) does not match a target load for the first port (120-N), exclude at least one of the sub-aggregated flows from the aggregated flow and modify said stored forwarding rules (820) by establishing a second rule associating the at least one of the sub-aggregated flows of the aggregated flow with a second output port (120-1) so as to improve the match between the target load and the load or predicted load on the first output port (120-N). A network device according to this aspect can efficiently change the splitting of aggregated flows in case of a load imbalance issue.

According to a fifteenth aspect, a network device (100) according to any of the fifth to fourteenth aspect is provided wherein the one or more group tables define forwarding based on hash results or via Weighted Cost Multi Pathing, WCMP. A network device according to this aspect can efficiently distribute incoming traffic to its output ports according to the target load on the respective output port.

According to a sixteenth aspect, a network device (100) according to the fifteenth aspect is provided wherein the hash is computed over at least one of the header (900) entries IP source (911), IP destination (912), Protocol (913), source port (914), destination port (915) and/or the forwarding rules (822) associating an input flow with an output port identify the input flow by at least one of said header (900) entries. A network device according to this aspect can efficiently distribute traffic to its output ports. Packets pertaining to the same microflow can be guaranteed to be forwarded to the same output port as long as the routing is not reconfigured. Aggregates of flows may be identified by only a few header entries and forwarded as a whole or sub-aggregates or microflows belonging to aggregate flows may be identified based on more header entries which may lead to a split of the initial aggregate flow.

According to a seventeenth aspect, a method is provided (1200) for forwarding traffic in a network device with a plurality of output ports, comprising storing forwarding rules including a first rule for forwarding packets of flows of an aggregated flow according to a given flow distribution to the output ports, in a case where the load on a first output port does not match a target load for the first port, excluding at least one of the flows from the aggregated flow and modifying said stored forwarding rules by establishing a second rule associating the at least one of the flows of the aggregated flow with a second output port so as to improve the match between the target load and the load on the first output port, and performing routing according to the stored forwarding rules.

The method may further comprise observing the load on the output ports, and in a case where the load on the first output port does not match the target load for the first port , identifying the flow with the heaviest load among the flows forwarded to the first output port according to the flow forwarding rules, and associating said identified flow to the second output port.

According to an embodiment, the method may further comprise predicting the future load on the output ports, and in a case where the future load on the first output port does not match the target load for the first port, identifying the flow with the heaviest future load among the flows forwarded to the first output port according to the flow forwarding rules, and associating said identified flow to the second output port.

In an exemplary implementation, the method may further be configured to, in a case where the load or predicted load (701) on the first output port (750) does not match the target load (702) for the first port, identify a set (720) of the largest flows forwarded to the first output port, wherein the number of flows in the set (720) is chosen such that if one more flow was added to the set (720) of flows, the total data rate of the flows of the set of flows would be larger than the difference between the load or predicted load (701) and the target load (702), assign said identified flows to one or more output ports other than the first output port (750).

Moreover, the method may include storing the first rule and the second rule in a forwarding table (801), wherein the forwarding table (801) stores forwarding rules which are either rules redirecting an input flow to the group table (821) or rules (822) associating an input flow with an output port, and each redirecting forwarding rule (821) is defined by a group table pointed to by the entry of the redirecting forwarding rule (821) in the forwarding table.

According to an aspect, the forwarding table (801) and the group table are stored in a Ternary Content Access Memory, TCAM.

According to an embodiment of the method, the assigning of a flow to the second output port, the second forwarding rule is added to the forwarding table (801).

In an exemplary implementation, the method may further be configured to use an interface to a controller wherein the method is configured to receive, over said interface, a target split ratio specifying for the output ports, the respective target loads; and/or said forwarding rules.

In some embodiments, the method may further include transmitting a request to the controller, over said interface, requesting the controller to provide the network device with one or more new or updated forwarding rules.

Moreover, the request may contain at least one of a notification of the load on the first output port not matching the target load for the first port, information on the TCAM utilization and/or the number of rules added locally, information on the deviation from the target load on each port, and a list of flows the network device associated with another port than the first port.

According to an aspect, a method as described above is provided wherein the modification of the forwarding rules (820) is chosen such that the deviation of the load or predicted load from the target load on the output port is minimized.

The method may further comprise using a Variable Sized Bin Packing Problem, VSBPP, algorithm in the improving of the match between the load or predicted load and the target load on the output ports after removing the flow(s) identified as having the highest load.

According to an embodiment, the method may further determine the target load per port (120-1 to 120-N) is from the forwarding rules (820) received from a control node.

According to an embodiment of the method, the stored forwarding rules (820) include a rule for forwarding packets of sub-aggregated flows of an aggregated flow, and in a case where the load or predicted load on a first output port (120-N) does not match a target load for the first port (120-N), at least one of the sub-aggregated flows is excluded from the aggregated flow and said stored forwarding rules (820) are modified by establishing a second rule associating the at least one of the sub-aggregated flows of the aggregated flow with a second output port (120-1) so as to improve the match between the target load and the load or predicted load on the first output port (120-N).

In an exemplary implementation, the one or more group tables define forwarding based on hash results or via Weighted Cost Multi Pathing, WCMP.

According to an embodiment of the method the hash is computed over at least one of the header (900) entries IP source (911), IP destination (912), Protocol (913), source port (914), destination port (915) and/or the forwarding rules (822) associating an input flow with an output port identify the input flow by at least one of said header (900) entries.

The methods mentioned above may be implemented as a software code including the code instructions, which implement the above-mentioned method steps. The software may be stored in a computer readable medium. The medium may be a processor memory, any storage medium or the like. The software may be used in devices such as control device or switch referred to above.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

FIG. 1    is a block diagram showing an example of a network and switch architecture with forwarding rules stored in the switch.

FIG. 2    is a diagram showing an example of ob-

FIG. 3    is a block diagram showing in further detail a network and switch architecture with three possible paths for traffic having different splitting ratios and a different number of forwarding network devices along the paths.

FIG. 4A    is a block diagram showing an example of a networking device according to the present disclosure with a high load on output port N.

FIG. 4B    is a block diagram showing the same networking device as in Fig 1A where the load on output port N is reduced by establishing a new rule for the flow distribution.

FIG 5A    is a block diagram showing a distribution of flows leading to a heavy load on one port and a small load on another port.

FIG 5B    is a block diagram showing one flow being redistributed from a port with a heavy load to a port with a small load.

FIG 6    is a block diagram showing a forwarding network device and a central network controller cooperating for efficient load balancing.

FIG 7    is a block diagram showing the measured/-predicted load compared to the target load on one port.

FIG 8    is a block diagram showing the forwarding rules in an implementation according to the present disclosure.

FIG 9    is a block diagram showing an example of significant fields of a packet header for the networking device to base its forwarding decisions on.

FIG 10    is a block diagram showing an example of a network setting to use forwarding network devices according to the present disclosure in.

FIG 11    is a block diagram showing an example of an algorithmic workflow for a centralized flow splitting algorithm.

FIG 12    is a flow diagram showing an example of a method used in a forwarding network device according to the present disclosure.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

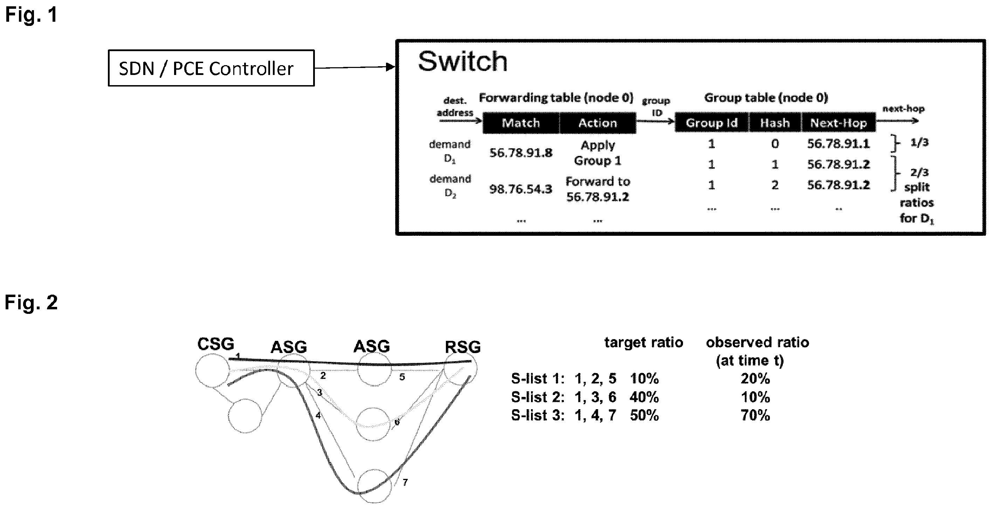

Typically, load balancing (or flow splitting) is implemented inside network devices such as switches and routers using two techniques. Examples for load balancing are shown in figures 1 to 3.

Figure 1 shows an SDN / PCE Controller capable of controlling a switch, for instance, by configuring a forwarding table and/or a group table used (and possibly also stored) by the switch. In particular, the switch receives a packet with a certain destination address and decodes based on the forwarding table and the group table to which next hop the packet is to be forwarded. The forwarding table here includes two columns, the column labeled as "Match" and including IP address (in general a possible destination address) and the column labeled "Action" and defining the forwarding rule / policy. For example, packets with destination address 56.78.91.2 are always forwarded to the next hop with the address 56.78.91.2. On the other hand, the packets with the destination address 56.78.91.8 are further split over several output ports towards different next-hop addresses shown in the group table (columns "Next-Hop"). The split ratio may be also specified by the SDN / PCE controller or another controlling entity or unit. The splitting is preformed based on a hash function calculated over some parts of the packet (header). The name "group table" refers to the fact that different tables may be used for different destination addresses.

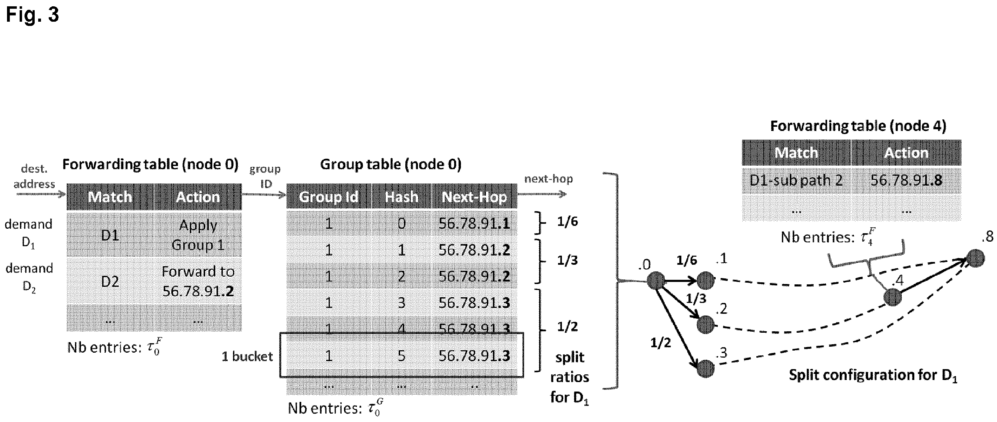

In particular, hash-based splitting where a hash is calculated over significant fields of packet headers (like source and/or destination address and/or port and/or transport protocol) and used to select the outgoing paths and Weighted Cost Multi Pathing (WCMP) where load balancing weights (for instance corresponding to, "split ratios" in figures 1 and 3 and "target ratio" in figure 2) are used to make sure that the number of flows on the outgoing paths meets a certain ratio. In both cases, once a decision is taken for a flow, all packets from a flow must follow the same decision (i.e. they follow the same path). However, in practice, the size of flows cannot be known in advance and the distribution of flow sizes is not uniform. Here, flow size can be understood as the load a flow imposes on the network (for instance on an input or output port of a forwarding device in a network).

Figure 2 shows an example for the actual ratio of the load on three output ports in a forwarding network device and the target ratio. The network devices in this example are 3GPP network nodes Cell Site Gateway (CSG), RNC Site Gateway (RSG) and two Aggregation Site Gateways (ASG). As the number of flows per port is distributed according to the target ratio, the actual load can differ significantly if, for instance, one or more flows are significantly larger (have a larger (heavier) load than most other flows). These two observations are at the source of problematic imbalance issues that load balancers have to solve.

According to the type of traffic repartition over multiple outgoing ports, it is possible to distinguish between even or uneven flow splitting. The first type is the most popular one and also known as Equal Cost Multi-Paths (ECMP). The second type allows a better utilization of network resources but is hard to implement. It is also known as Unequal Cost Multi-Paths (UCMP). In both cases, the implementation inside forwarding network devices leverages on a Ternary Content Access Memory (TCAM) for efficient packet processing. The TCAM memory inside the switches is further divided in two tables: the forwarding and the group table, as shown in figures 1 and 3. Figure 3 shows more generally than Figure 1 that not only IP addresses, but in general any demand such as D1 and D2 may be matched in the forwarding table. The demand may correspond to identification of destination in any form such as destination name or address, or a flow number or identification, or the like.

For each incoming packet, the switch looks for the corresponding match in the forwarding table (for instance, by comparing any or all of the header entries to the corresponding entries in the forwarding table), which specifies if the packet can be directly forwarded or if a specific split must be applied. In this latter case, the switch looks for the corresponding entry of the group table where, according to the output of the value of a hash computed over significant fields of packets (i.e. fields of the packet header), the next hop is determined. The configuration of entries, also called buckets, in the group table defines the split ratio, i.e., the load balancing, used for a specific flow aggregate. Given the global view of the network, the PCE controller can instruct each switch with the best TCAM configuration. This is illustrated in Figure 3 which shows that not only node 0 has a forwarding table, but also e.g. node 4 which is on the way between the source an destination of D1. At each node, the aggregated flow D1 or its parts may be split or aggregated again (e.g. by forwarding two sub-flows of the aggregated flow to the same next hop).

As traffic evolves during time, the flow distribution observed locally within a node may differ from the target one computed by the controller. For this reason, corrective actions are needed to accurately track the ongoing traffic distribution and adjust load balancing to better handle problematic flows.

In the state of the art two classes of solutions have been proposed to the problem: 1) elephant flow scheduling and 2) utilization-aware load balancing. In elephant scheduling, a default routing policy is used for all the flows (ECMP for instance). On top of this, the network controller keeps track of a list of the largest flows, also called elephant flows, top-N flows or heavy hitters, with the help of a monitoring system that uses classical IPFIX packet or flow sampling techniques. Once the list of the largest flows is established in the centralized monitoring system, the controller can decide to take specific routing decisions for some of them in case of imbalance issues. As the identification of heavy hitters (problem source) and the routing decisions (corrective actions) are taken in the controller, this solution is quite slow to react to short term traffic variations. In utilization-aware load balancing, the main idea is to use a routing policy for every single flow and adjust these routing policies to the actual flow size. Techniques are used to migrate flows from one path to another without packet losses and reordering issues. For instance, CONGA, tracks the congestion of outgoing paths and selects the uplink port that minimizes in-network congestion. Decisions are taken at flowlet level (64K max per device) wherein flows are split into flowlets whenever there is a long-enough gap in the sequence of packets in a given flow. LocalFlow tracks the rate of flows and periodically solves a bin packing problem to split them. As both methods take custom decisions for every flow, many forwarding rules need to be managed by the devices.

Embodiments of the present invention can provide the right trade-off between the two approaches by relying on a default routing policies computed centrally and real-time adaptations locally in case of imbalance issues.

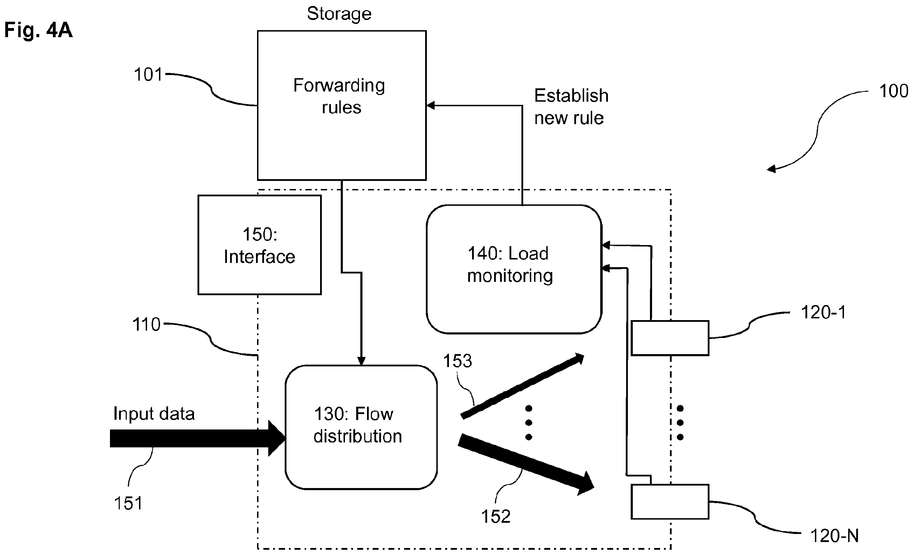

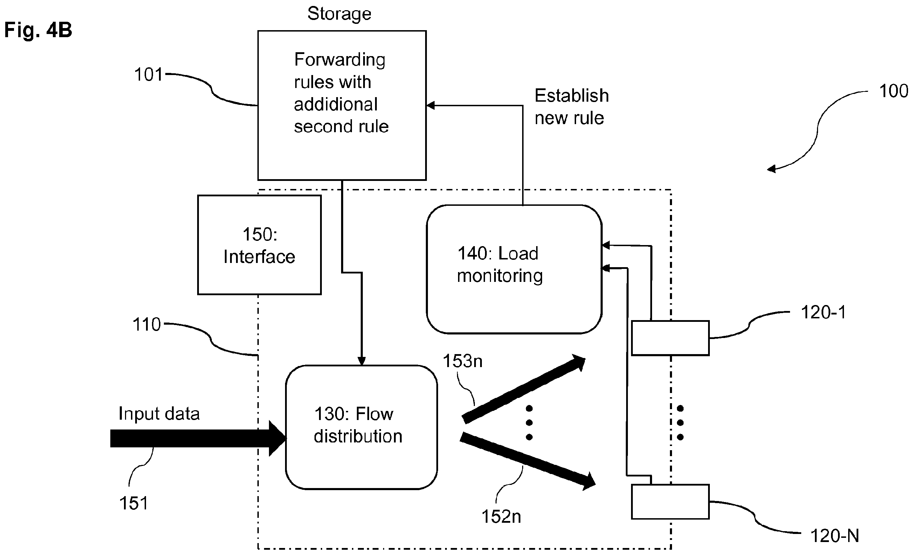

In the following, embodiments of a network device 100 according to the present disclosure that is capable of improving load balancing are described based on Figs. 4 to 10.

Figures 4A and 4B show a network device 100. The network device 100 stores one or more forwarding rules in a storage 101. In particular, the network device may be a network switch or router or gateway. Incoming data are forwarded to the various output ports 120-1 to 120-N according to the one or more forwarding rules. The incoming data 151 may be packets pertaining to flows, and the flows may be bundled to flow aggregates.

The flows may be distributed by distribution unit 130 to the output ports such that data (packets) pertaining to the same microflow are forwarded to the same output port. Data pertaining to the same aggregate flow may be forwarded to the same or distributed to different output ports. The number of flows or flow aggregates forwarded to each output port may be defined by the forwarding rules. The flow distribution to two ports 120-1 and 120-N is illustrated exemplarily in Figure 4A, wherein the load 152 is larger than the load 153. The network device 100 may further be configured to measure the load on each output port (including loads 152 and 153) by means of a load monitoring unit 140. In an embodiment, this may be achieved by measuring the bandwidth utilization on the corresponding one or more output ports 120-1 to 120-N.

In this example, if the measured load on an output port 120-N does not match the desired load on that output port a new rule may be established by the network device. As shown in Figure 4A, flow 152 is heavier than flow 153. Accordingly, the load monitoring unit 140 detects this mismatch and determines the new forwarding rule, which improves the load balance. The result of the load balancing is illustrates schematically in Figure 4B. The input data 151 is split into two new flows 152n and 153n which are more balanced. It is noted that in this example, the target balancing was equal distribution of the input data 151 to ports 120-1 and 120-N. However, in general, the desired load balancing ratio is not limited to uniform distribution and a split ratio may be configured for each flow, and/or for each port.

The new rule may be stored in the storage 101. According to the new rule, one or more of the flows that were previously forwarded to port 120-N is or are now redistributed to another output port, here 120-1 or possibly also other ports between the ports 120-1 and 120-N. This may result in a distribution of the load on the output ports that is closer to the corresponding target loads. The target loads may be the same for all output ports or they may be different and defined for each output port individually.

In other words, the network device100 for forwarding traffic with a plurality of output ports 120-1 to 120-N generally comprises a storage system 101 storing forwarding rules including a first rule for forwarding packets of flows of an aggregated flow 151 according to a given flow distribution to the output ports 120-1 to 120-N. The network device further comprises a circuitry (including flow distribution circuitry 130 and load monitoring circuitry 140) configured to, in a case where the load (which might be measured, for instance in terms of bandwidth utilization) on a first output port 120-N does not match a target load for the first output port, exclude at least one of the flows from the aggregated flow and modify said stored forwarding rules by establishing a second rule associating the at least one of the flows of the aggregated flow with a second output port so as to improve the match between the target load and the load on the first output port; and perform routing according to the stored forwarding rules.

In an implementation according to the present disclosure, in the case of a significant imbalance between the measured load and target load, the "bucket monitoring" module (load monitoring) 140 in the switch 100 can decide to install probes to analyze the outgoing traffic in more detail. To identify the most problematic flows, also called heavy hitters or elephant flows, the forwarding network device can use techniques such as packet or flow sampling, or advanced techniques such as the sketches. The significance of imbalance may be determined, for instance, by the deviation or difference or other disparity measure between the desired and current load.

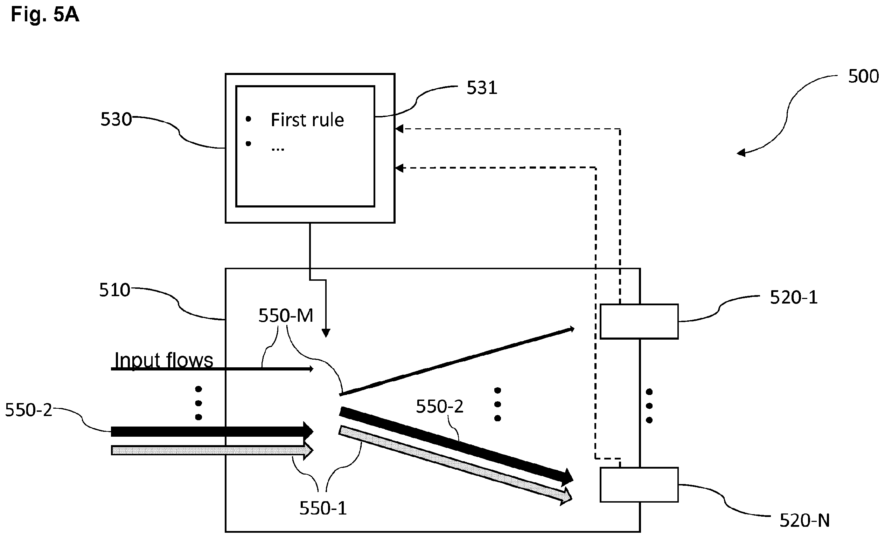

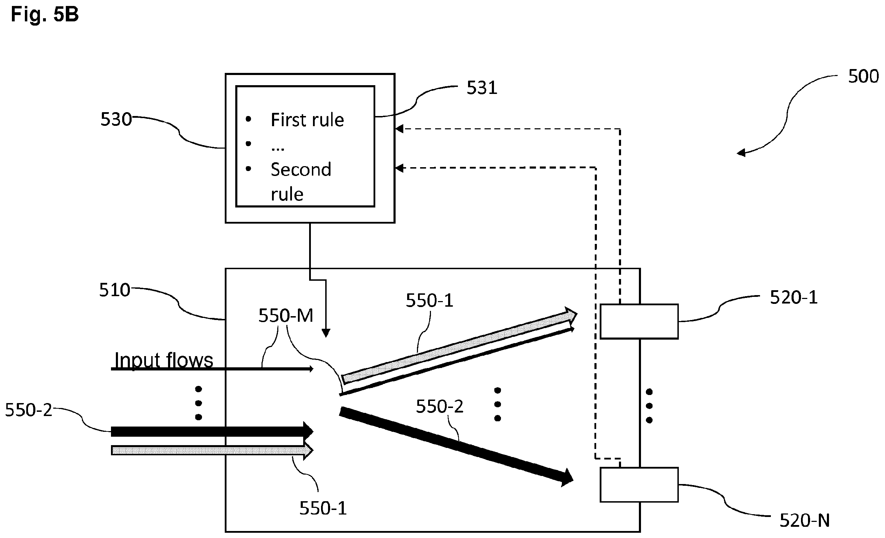

Once the potential elephant flows have been identified, the switch tries to locally adjust routing (bucket configuration may be changed in case of hash-based splitting) for them in order to solve the imbalance issue. This may be done by associating the flow (for instance, 550-M) with the largest load, which is associated with the output port (for instance, 520-N) in which the measured load is significantly larger than the target load, to a different output port, as illustrated in Figures 5A and 5B.

Figures 5A and 5B differ in particular from Figures 4A and 4B respectively in that they illustrate the input aggregated flow as including a plurality of flows or flow aggregates 550-1 to 550-M which are distributed by the network device to the output ports 520-1 to 520-N. Figure 5A shows an example in which the two heaviest incoming flows (550-1 and 550-2) are forwarded to the same output port 520-N. In this example, the input flows are ordered from the lightest flow 550-M to the heaviest flow 550-1 from top to bottom. It is noted that not all flows are shown in this figure and that each incoming flow can be forwarded to any output port. It is further noted that more flows can be forwarded to ports 520-N and 520-1. In this example, it is shown that at least two heavy flows are forwarded to port 520-N. In this example, the target load may be the same for each port or, without restriction, the target load for port 520-N may be much smaller than the actual load caused by the heavy flows 550-1 and 550-2. For port 520-1 on the other hand, the actual load may be smaller than the target load. When the network device has detected the discrepancy between the actual and the target load on an output port (in this example, port 520-N), it analyzes the load on the corresponding port and identifies the heaviest flow. In general, the network device may identify not only the heaviest flow, but a set of the heaviest flows. In this example, the network device identifies 550-1 as the flow with the heaviest load and adds a rule to the storage 530 that causes flow 550-1 to be forwarded to a different port (520-1 in this example). It is noted that, in the example shown in figure 5, the loads on output ports 520-N and 520-1 are assimilated by the newly added rule. However, the target loads on the output ports can be different. In both cases, the new rule is chosen such that the actual loads on the output ports are assimilated to the target loads. In other words, in a network device according to this implementation, the circuitry is configured to observe the load on the output ports 520-1 to 520-N and, in a case where the load on the first output port 520-N does not match the target load for the first port 520-N, identify the flow 550-1 with the heaviest load among the flows forwarded to the first output port according to the flow forwarding rules; and associate said identified flow 550-1 to the second output port 520-1.

In another Implementation according to the present disclosure, the identification of the most problematic flows may use predictive models to forecast the size of flows. Correspondingly, the network device according to the invention, predicts the future size of the flows and compare the future predicted load with the target load. Further, the network device may associate the flow with the largest future load on an output port where the present or future load deviates significantly from the target load with a different output port.

The prediction may be performed in any manner. For example, extrapolation of the load measured in the past (over one or more time instances) may be applied. However, in some implementations, the prediction may also be performed using the load measured currently and/or previously at the neighboring routers / switches (network nodes) or generally any routers / switches in the network.

In other words, a network device according to the invention is configured to predict the future load on the output ports and, in a case where the future load on the first output port does not match the target load for the first port, identify the flow with the heaviest future load among the flows forwarded to the first output port according to the flow forwarding rules and associate said identified flow to the second output port.

However, the present disclosure is not limited to changing the forwarding of one flow. In cases where several heavy flows are forwarded to the same output port while the load on other ports is smaller than the target load, it might be necessary to redistribute several heavy flows. These flows may be associated with one other output port or several other output ports.

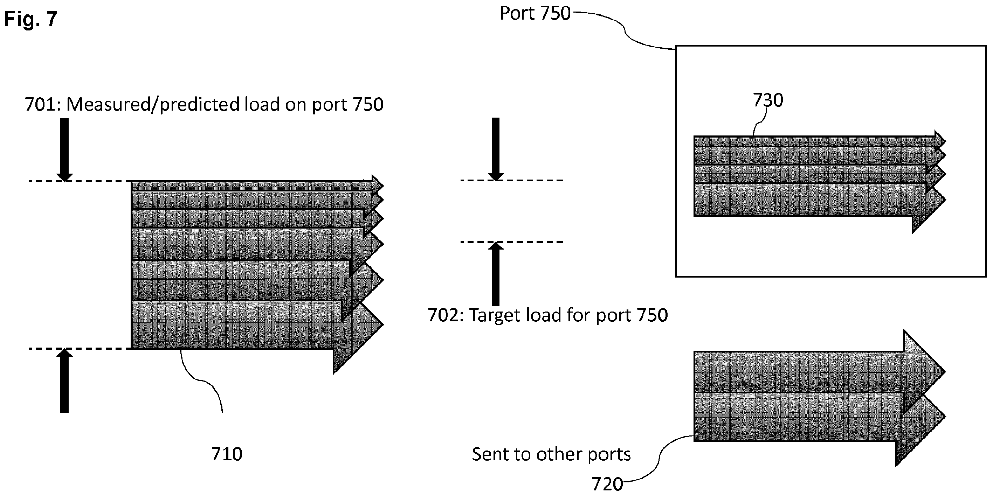

Figure 7 shows an example of a set of flows 710 initially forwarded to one output port 750 with the load or predicted load 701. In this example, the target load 702 is significantly smaller than the actual load 701. In an implementation according to the present disclosure, a set of the flows 720 with the largest loads on the output port 750 on which the load 701 is significantly larger than the target load 702 (also called target throughput in the following) may be identified. The set of flows with the largest flows may be chosen in the following way: Knowing the real throughput $T_r^p$ (701 in this example) on outgoing paths p (here, 750) and the expected target throughput $T_e^p$ (here 702), the path is determined where the deviation $T_r^p\text{-}T_e^p$ is the highest. If $T_r^p\text{-}T_e^p > \Delta$ on this path, find the subset of problematic flows out of Top-N flows (here 720) $F_1 >... > F_N \Rightarrow$ Find $i$ such that argmax $\sum_1^{j=i} F_j < T_r^p\text{-}T_e^p$.

In other words, the i largest flows are chosen as the subset 720 of the largest (problematic) flows wherein i is chosen such that if the remaining largest flow (from the set 730 of flows that were not added to the set of i problematic flows) would have been added to the subset of i problematic flows, the load on the corresponding output port would be smaller than the target load. Then, the subset of the i problematic flows may be distributed to other output ports.

Each of the flows of the subset of problematic flows may be forwarded to different output ports or all flows of the set of problematic flows may be sent to the same output port.

In other words, the network device may be configured to, in a case where the measured or predicted load on the first output port does not match the target load for the first port, identify a set of the largest flows forwarded to the first output port, wherein the number of flows in the set is chosen such that if one more flow was added to the set of flows, the total data rate of the flows of the set of flows would be larger than the difference between the measured or predicted load and the target load and to assign said identified flows to one or more output ports other than the first output port.

In another implementation, the flows may be redistributed such that the deviation of the load or predicted future load on all output ports is minimized by analyzing the size of a set of flows including more than the problematic heaviest flows and, for instance, solving a bin packing problem with more flows. However, this approach may need more computational power.

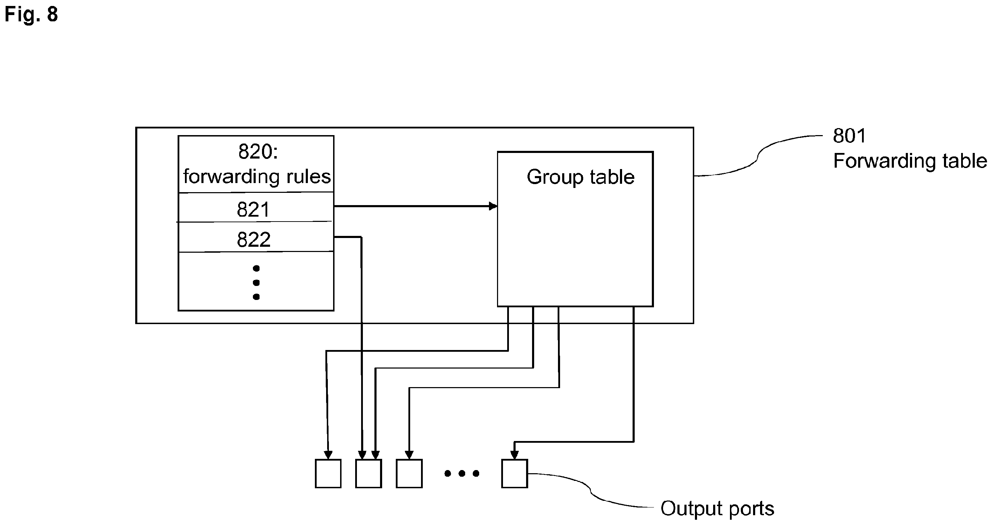

In an implementation according to the present disclosure, the forwarding rules are stored in a forwarding table 801. An example for such a table is shown in figure 8. According to this implementation, a rule (for instance 822) can either directly associate a flow with an output port or define (for instance 821) a group table for one or more flows or flow aggregates, which defines the forwarding for the corresponding flows and/or flow aggregates or sub-aggregates. The decision which packets to forward to which output port (and thus, which flow) may be based on the result of a hash function, applied to significant fields of the packet headers. In other embodiments, the decision may be based on any rule that associates packets belonging to the same flow to the same output port.

A forwarding table can contain one or more rules of one of the types described above or rules of both types. In the example shown in figure 8, the group table points to all shown output ports, however a group table according to the present disclosure may also define forwarding to any subset of the available output ports.

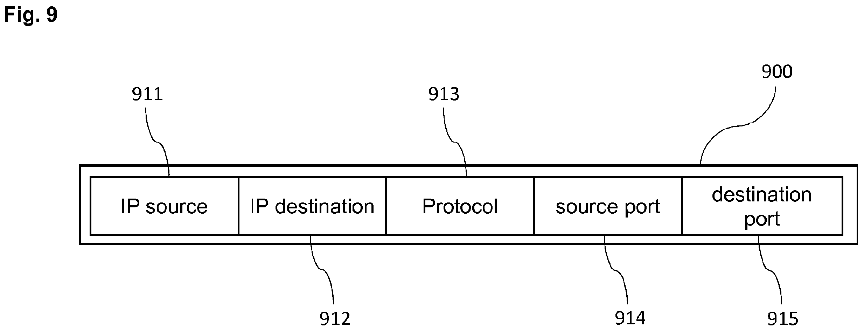

An exemplary packet header is shown in figure 9. Significant fields here may include, for instance any or all of IP source 911, IP destination 912, protocol 913, source port 914 and/or destination port 915. However, the forwarding can be applied to any other kinds of protocols with different packet headers and thus different fields.

In the network device according to the implementation described above, the first rule and the second rule are stored in a forwarding table 801, wherein the forwarding table 801 stores forwarding rules which are either redirecting an input flow to a group table or rules 822 associating an input flow with an output port, and each hash-based rule is defined by a group table pointed to by the entry of the forwarding rule 821 in the forwarding table.

In one embodiment, the group table may define to which port to forward the packets based on the result of a hash function. This hash function may calculate a hash from a predefined portion of the packet header. The predefined portion may be any fraction of or the whole packet header.

In another embodiment the group table may define to which port to forward the packets via Weighted Cost Multi Pathing, WCMP. The implementation of the WCMP may but does not need to employ hash calculation. In general, the group table may define which packet to forward to which output port depending on a predefined portion of the packet header.

According to an embodiment, the forwarding rules are stored in a Ternary Content Access Memory. In other words, in an implementation according to this embodiment, the forwarding table and the group table are stored in a Ternary Content Access Memory (TCAM) which may permit a fast execution of the forwarding according to the stored forwarding rules.

A network device according to the present disclosure can improve the efficiency of using the TCAM. Group tables can be used where rules that quasi statistically distribute flows over the output ports are sufficient, and problematic flows can be identified and individually forwarded for example if their load deviates significantly from the average load of all flows.

This can for instance be important if flows are distributed to the output ports by assigning the number of flows quasi statistically to each output port according to the ratio of the target loads on the output ports. If all flows had the same size, or if the number of flows assigned to each output port was large enough to suppress statistical fluctuations in the size of the flows, the actual load on each output port would match the target flow. However, in reality the load of some flows is significantly larger than the average flow load.

In such a case, a network device according to the present disclosure can extract problematic flows and forward them separately. In doing so, it can resolve congestions without having to wait for instructions from another network entity and without having to establish an individual rule for every flow.

In an implementation according to the present disclosure, when a new rule is established locally, the forwarding network device adds an individual rule to the forwarding table. This individual rule specifies directly to which output port to forward the corresponding flow. In other words, in in the assigning of a flow to the second output port, the second forwarding rule is added to the forwarding table. On the other hand, a forwarding network device could also add or change group tables.

In an implementation according to the present disclosure, the network device comprises an interface 150 to a network controller. The network controller may be a central controller like an SDN controller or PCE that can gather information on the network and communicate with all or some of the network devices forwarding the network traffic.

Over the interface 150, the network device can, for instance, receive forwarding rules from the network controller. These can be individual rules for single flows (rules associating a flow directly with an output port) or rules based on group tables or both. Furthermore, the network device can receive target split ratios for the incoming flows between the output ports or the corresponding target loads. In addition, the network device could calculate the target load on each output port from the target split ratios or vice versa.

For instance, if the central controller is aware of flows with a heavy load, it can set individual forwarding rules for these heavy flows in the forwarding network devices in order to avoid congestions. Additionally the central controller can provide an initial set of rules comprising target split ratios and update the rules if the network is modified. The forwarding network device might modify the forwarding rules (for instance, the rules defining an individual output port for a flow) locally if there is a significant deviation from the target split ratios.

In other words, a networking device according to the implementation described above, comprises an interface 150 to a controller (e.g. SDN controller or PCE) and its circuitry is configured to receive, over said interface, a target split ratio, specifying for the output ports the respective target loads, and/or said forwarding rules.

The interface can also be used, for instance, to exchange further information like information on sizes of flows or future sizes of flows, which can be used by a network device to find new optimal forwarding rules locally or for the central controller to forward to other network devices.

According to an embodiment, the network device may send a request to the controller via the interface 150. This can be useful, for instance, in a case where the network device cannot resolve a significant deviation from the target load on the output ports by adding rules to or changing the rules in its own forwarding table. In particular, in case the deviation cannot be solved locally, the network device can ask the controller for a global reconfiguration of load balancing.

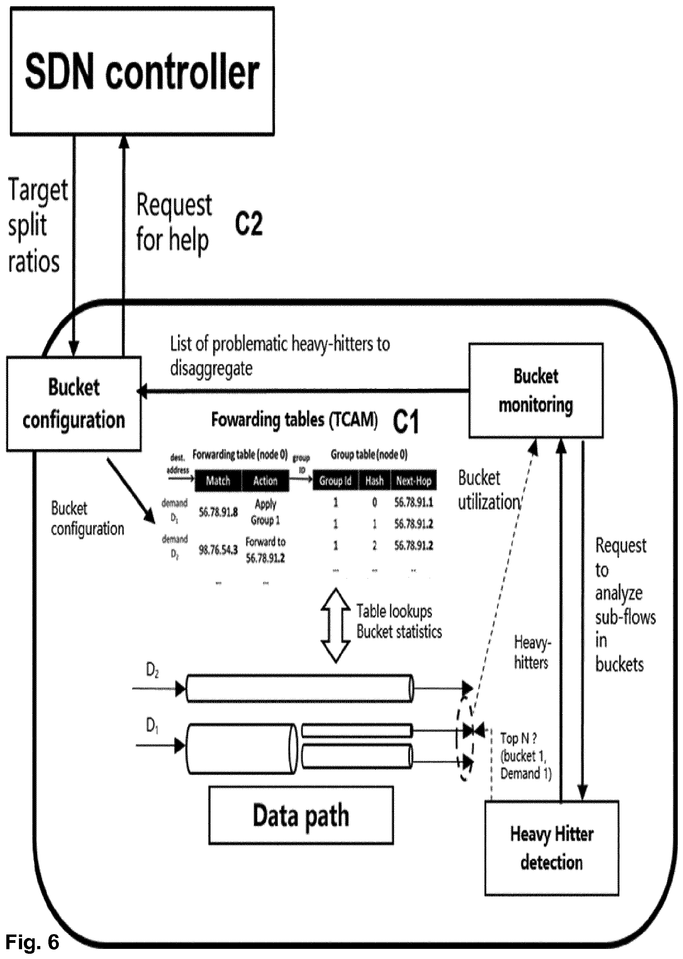

Figure 6 shows the architecture of a switch (may be any forwarding network device) and how the different components interact in order to solve the problem of accurate load balancing. The load balancing can be logically divided in two parts: the former is implemented locally inside the switch, while the latter requires the interaction between the switch and the centralized controller for the sake of a global re-optimization of the network.

Initially, the network device may receive a set of rules from the central controller. Alternatively, the network device might choose target splitting ratios itself (for instance equal weights on all output ports).

At first, the switch node (forwarding network device) monitors traffic on outgoing ports in order to detect if some flow aggregates are deviating from the original target rate assigned by the centralized controller. In the case of significant imbalance, the "bucket monitoring" module in the switch can decide to install probes to analyze the outgoing traffic more in detail. To identify the most problematic flows, also called heavy hitters, the switch can use standard techniques such as packet or flow sampling, or advanced techniques such as the sketches in the "heavy hitter detection module".

Note that the identification of the most problematic flows may use predictive models to forecast the size of flows. Once the potential elephant flows have been identified, the switch tries to locally adjust routing (for instance bucket configuration in case of hash-based splitting) for them in order to solve the imbalance issue. If the problem cannot be fixed by the switch, it can ask the controller for help. Once the controller has decided a new routing configuration, the switch receives new target split ratios (or new forwarding rules) from the controller and locally updates load balancing.

Compared to other existing centralized approaches, the proposed idea can allow to quickly react to traffic changes, significantly reducing the time required to adapt to varying traffic conditions.

Compared to distributed approaches, the proposed idea can leverage on the assistance of the centralized controller, in order to compensate significant traffic unbalance that could not be fixed by acting locally only.

The main benefits provided are that the adjustment can be performed locally in most cases while keeping the memory usage (a Ternary Content Access Memory (TCAM) may be used) very low: a few specific rules are used for problematic flows.

In other words, a forwarding network device according to the embodiment described above is configured to transmit a request to the controller, over said interface, requesting the controller to provide the network device with one or more new or updated forwarding rules.

In an implementation according to the present disclosure, the help message triggered by the network device to ask for support by the centralized controller may be composed of two parts: a first mandatory part to notify the controller on the current imbalance and on the resource status and a second optional part which contains more information about the issue that caused the request from the switch to the controller. The mandatory part may include a notification of the imbalance issue and the Current TCAM utilization in the switch.

The optional part may comprise any of the deviation from the target load on each output port, the deviation from the target on each port (in some embodiments this may correspond to the the target load on each tunnel (which may be an MPLS tunnel)) and a list of problematic heavy-hitters (flow-level information).

This information can be useful for the central network controller for finding better solutions for network settings. For instance, knowing the TCAM utilization of the network device can be used to avoid adding too many individual rules to the corresponding network device.

In an embodiment, the modification of the forwarding rules is chosen such that the deviation of the measured or predicted load from the target load on the output ports is minimized.

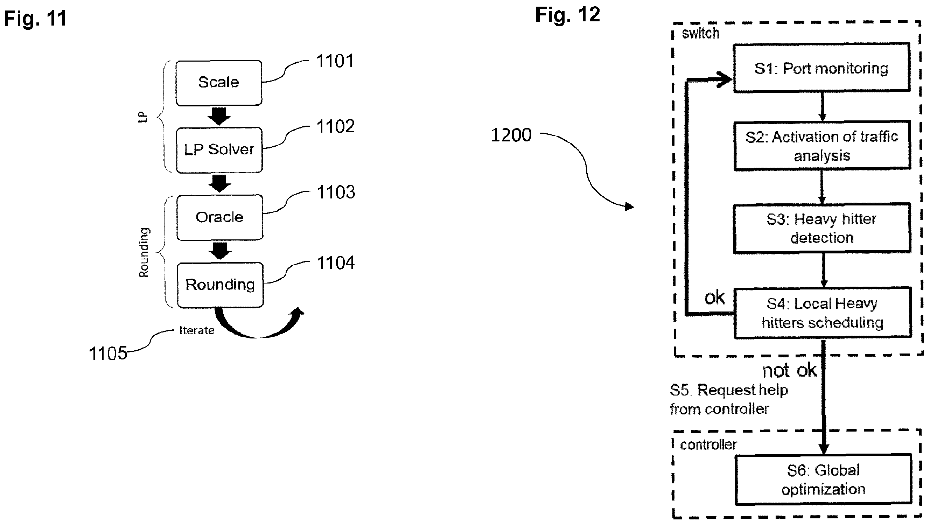

An example of the computation of a new splitting distribution through the centralized algorithm shown in Figure 11.

In a first step (1101) link capacities are scaled down by a factor $\alpha$. This prevents a 100% link utilization and reserves space for rounding. Different values of $\alpha$ can be tested in parallel.

In a second step (1102) the relaxed multi-commodity flow is relaxed (i.e., using column generation). Bucket constraints are removed, integer variables are relaxed and the LP (Linear Programming) is solved.

In a third step (1103) a proportional and fair amount of bucket budget is allocated to each demand (according to the size) at each source node.

In a fourth step (1104) the fractional solution is round up randomly to find a feasible bucket configuration which minimizes the error.

In a fifth step (1105), if demands can still be allocated, the above steps are iterated.

In other words, in a network device according to the implementation described above the request contains at least one of a notification of the measured or predicted load on the first output port not matching the target load for the first port, information on the TCAM utilization and/or the number of rules added locally, information on the deviation from the target load on each port, and a list of flows the network device associated with another port than the first port.

In an implementation according to the present disclosure, the modification of the forwarding rules is chosen such that the deviation of the measured or predicted load from the target load on the output port is minimized. This may mean that the forwarding network device redistributes flows such that the deviation of the load from the target load in minimized. In one embodiment the load deviation is minimized within the scope of only redistributing the largest flows. However, more flows may be redistributed in other embodiments. Furthermore, the central controller changes the forwarding rules in one or more network devices such that load deviations that cannot be resolved locally are minimized. Note that the central controller may also amend the forwarding rules different network devices than the ones where the load deviations occur.

In an embodiment according to the present disclosure, when amending the forwarding table to resolve a significant deviation of the measured or predicted load from the target load, the network device uses a Variable Sized Bin Packing Problem (VSBPP) algorithm after removing the one or more flows identified as having the highest load.

In particular, when the network device knows what capacity is left on each outgoing port (once problematic flows have been virtually removed), a VSBPP can be solved to minimize the deviation to the expected target throughputs $T_e^p$. This problem is NP-Hard, but several approximation algorithms are available. In other words, in a network device according to this embodiment, for the improving of the match between the measured or predicted load and the target load on the output ports a Variable Sized Bin Packing Problem, VSBPP, algorithm is used after removing the flow(s) identified as having the highest load.

The bin packing algorithm may try to find an optimal solution for the set of flows that were identified as having the highest load. Alternatively, the algorithm may include more flows as variables for the bin packing problem. This may lead to a smaller deviation of the load from the target load but may also need more computational power.

In an embodiment according to the disclosure, the network device can determine the desired target load per port from the forwarding rules it received from a network control node. If the forwarding rules quasi-statistically distribute the flows to the output ports, possibly with different weights, these weights can be used to determine the target loads on the respective output ports. In other words, if, for instance, forwarding rules are provided to the network device by a network controller, the network device can calculate the target loads on its output ports without additionally having to receive the target loads. Conversely, the network device might only receive the target loads for its output ports and determine forwarding rules from the target loads.

In an implementation according to the present disclosure, flows can be aggregated to sub-aggregated flows and the flows and sub-aggregated flows can further be aggregated to aggregated flows that may comprise flows and/or sub-aggregated flows. When new rules are added to the set of rules in a forwarding network device (the rules may be changed by the network device itself or by a central controller), they can change the forwarding of aggregated flows as well as sub-aggregated flows and flows. It is further noted that aggregated flows can be split (into sub-aggregated flows of flows) and distributed over several outgoing paths. Likewise, flows and sub-aggregated flows can be merged. This can be caused by the initial as well as the amended forwarding rules. When rules are changed, the splitting and merging of flows and aggregated flows may be changed consequently.

In other words, a network device according to the implementation described above stores forwarding rules including a rule for forwarding packets of sub-aggregated flows of an aggregated flow, and in a case where the measured or predicted load on a first output port does not match a target load for the first port, excludes at least one of the sub-aggregated flows from the aggregated flow and modifies said stored forwarding rules by establishing a second rule associating the at least one of the sub-aggregated flows (e.g. a flow which according to the hash rule (or generally the first rule) was assigned to the first port) of the aggregated flow with a second output port so as to improve the match between the target load and the load on the first output port.

In an implementation according to an embodiment, the network device forwards the packets depending on the result of a computation of a hash over at least one of the header entries IP source, IP destination, Protocol, source port, destination port and/or the forwarding rules associating an input flow with an output port and/or the forwarding rules associating an input flow with an output port identify the input flow by at least one of said header entries.

Header entries can be entries TCP/IP or UDP/IP headers or entries of any other kind of headers.

Aggregated flows may be forwarded depending on only one or two of the header entries and sub-aggregated flows may be forwarded depending on more header entries than are used for the aggregated flows and flows may be forwarded depending on more entries than are used for sub-aggregated flows. The same mechanism can be used for flows and aggregated flows by the network device in any kind of forwarding, for instance, when a specific forwarding rule for a flow or aggregated flow is defined, wherein the specific forwarding rule forwards the flow or aggregated flow to a specific output port directly.

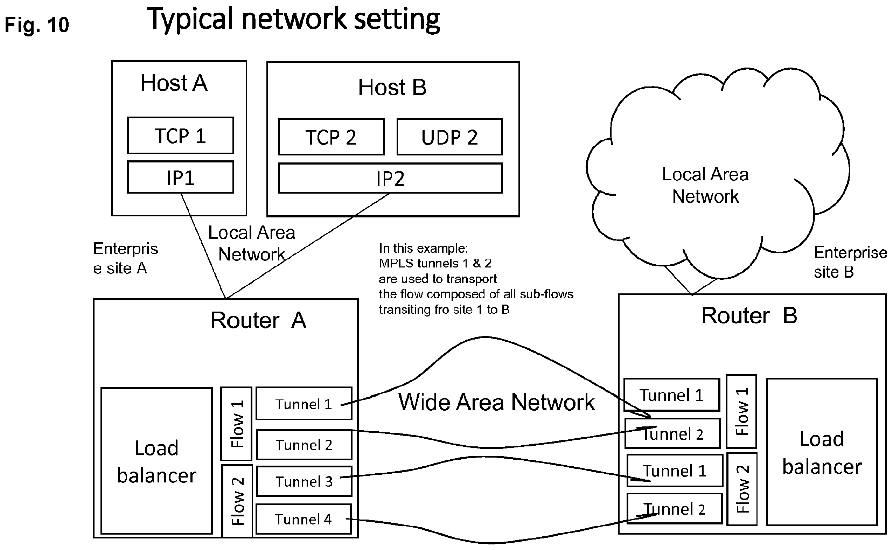

Figure 10 shows an exemplary network in which a network device according to the present disclosure can be used. Host A and Host B are part of a local area network. In this example, the local area network comprising Host A and Host B is part of Enterprise site A comprising also Router A. Enterprise site A is connected via a Wide Area Network with Router B which is part of Enterprise Site B comprising, again, a local area network. In this example. MPLS tunnels are used to transport a flow from site A to site B (wherein this flow may also be called aggregated flow). The flow or aggregated flow from site A to site B may be composed of any number of sub-flows. Network devices that are part of the Wide Area Network in this example can perform load balancing as described in the present disclosure.

Figure 12 shows an example for a method to optimize load distribution according to the present disclosure. In an implementation of a method for forwarding traffic in a network device with a plurality of output ports according to the present disclosure, forwarding rules are stored, that include a first rule for forwarding packets of flows of an aggregated flow according to a given flow distribution to the output ports and, in a case where the load on a first output port does not match a target load for the first port, at least one of the flows from the aggregated flow is excluded and said stored forwarding rules are modified by establishing a second rule associating the at least one of the flows of the aggregated flow with a second output port so as to improve the match between the target load and the load on the first output port, and routing is performed according to the stored forwarding rules.

In particular, to detect if the load on a first output port does not match a target load for the first port, the outgoing port utilization may be monitored (S1 in figure 12). This may be done by measuring the real throughput $T_r^p$ on each outgoing paths p and comparing it with the expected throughput $T_e^p$ (decided by the controller). To decide which new rule to establish, the traffic may be analyzed inside problematic outgoing ports (see S2 in figure 12). If $T_r^p - T_e^p > \Delta$, probes may be installed on related ports to identify heavy hitters. Standard techniques like packet or flow sampling or advanced techniques like sketches may be used. As shown in S3 in figure 12, to identify problematic heavy hitters (large flows) the top Ns or largest flows are analyzed to identify which flow must be load balanced separately. Further, traffic prediction may used to select flows based on their expected future size. More generally, the subset of problematic flows is identified. S4 shows adjusting of forwarding for problematic flows. The next hop for problematic flows may be calculated locally and a bin packing algorithm may be used for this calculation. If needed, the controller may be asked for help (S5 in figure 12). In particular, the controller may be asked to globally configure the network (trigger for a global adjustment) if the imbalance problem cannot be solved locally. In general the method may include going back to the first step S1 and repeat the steps.

The device and method according to the present disclosure proposes a solution for imbalance issues by adapting load balancing to real traffic conditions. The main property of the solution may be that adaptation 1) is made locally in priority and up to the controller when needed, and 2) focuses on problematic flows (the one at the root of the imbalance issue) so that a limited set of additional rules are used in forwarding tables.

In this disclosure a method and an apparatus for accurate load balancing are provided that may locally identify the sources of imbalance issues, such as elephant flows whose distribution deviates from the original planned target, locally adjust the forwarding of problematic flows by adjusting the split of flows and reassigning forwarding rules and ask the centralized controller for help in case the target distribution cannot be met.

In other words, this disclosure provides a method to locally identify the source of imbalance issues in that the switches (forwarding network devices) continuously observe the traffic on outgoing ports to detect deviation issues. In case of a deviation, they can perform traffic analysis on ports to identify problematic flows (typically the largest ones, called Top-N or heavy hitters). Then, the switches locally adjust forwarding for problematic flows. To do so, they can extract problematic flows and forward them separately. Then a small bin packing problem may be solved locally. In case the deviation cannot be solved locally, the switches can ask the controller for a global (potentially network-wide) reconfiguration of load balancing.

Summarizing, the present disclosure relates to a device and method for a traffic forwarding network device and proposes a solution for imbalance issues by adapting load balancing to real traffic conditions. The network device tries to solve imbalance issues locally by readjusting the traffic of problematic flows and in case the issues cannot be solved locally, notifies a central network controller to reconfigure the network in order to solve the imbalance issue.

**Claims**

1. A network device (100) for forwarding traffic with a plurality of output ports (120-1 to 120-N, 520-1-520-N), comprising:

   a storage system (101, 530) storing forwarding rules including a first rule for forwarding packets of flows of an aggregated flow according to a given flow distribution to the output ports;
   a circuitry (110, 510) configured to:

   in a case where the load on a first output port (120-N, 520-N) does not match a target load for the first output port, exclude at least one of the flows from the aggregated flow and modify said stored forwarding rules by establishing a second rule associating the at least one of the flows of the aggregated flow with a second output port (120-1, 520-1) so as to improve the match between the target load and the load on the first output port; and perform routing according to the stored forwarding rules;

wherein the load on the first output port (120-N, 520-N) is a measured load or a predicted load;

wherein the circuitry (110, 510) is configured to:

predict a future load on the output ports (520-1 to 520-N);

in a case where the predicted future load on the first output port (520-N) does not match the target load for the first output port (520-N), identify the at least one of the flows (550-1) with the heaviest future load among the flows (550-1 to 550-N) of the aggregated flow forwarded to the first output port (520-N) according to the flow forwarding rules;

associate said identified flow (550-1) to the second output port (520-1).

2. The network device (500) according to claim 1, wherein the circuitry (510) is configured to:

observe the load on the output ports (520-1 to 520-N);

in a case where the load on the first output port (520-N) does not match the target load for the first output port (520-N), identify the at least one of the flows (550-1) of the aggregated flow with the heaviest load among the flows (550-1 to 550-N) of the aggregated flow forwarded to the first output port (520-N) according to the flow forwarding rules; and

associate said identified flow (550-1) to the second output port (520-1).

3. The network device (500) according to any of claims 1 to 2 wherein the circuitry (510) is further configured to:

in a case where the load or predicted load (701) on the first output port (750) does not match the target load (702) for the first output port, identify a set (720) of the largest flows forwarded to the first output port, wherein the number of flows in the set (720) is chosen such that if one more flow was added to the set (720) of flows, the total data rate of the flows of the set of flows would be larger than the difference between the load or predicted load (701) and the target load (702); assign said identified flows to one or more output ports other than the first output port (750).

4. The network device (100) according to any of claims 1 to 3, wherein

the first rule and the second rule are stored in a forwarding table (801), wherein the forwarding table (801) stores forwarding rules which are either rules redirecting an input flow to a group table or rules (822) associating an input flow with an output port;

wherein in case the forwarding rules are rules redirecting an input flow to a group table, each redirecting forwarding rule (821) points to a set of entries of the group table that implements traffic split over multiple paths wherein the input flow is the aggregated flow.

5. The networking device (100) according to claim 4, wherein the forwarding table (801) and the group table are stored in a Ternary Content Access Memory, TCAM.

6. The network device (100) according to claim 4 or 5, wherein in the assigning of a flow to the second output port, the second forwarding rule is added to the forwarding table (801).

7. The network device (100) according to any of claims 1 to 6 comprising an interface (150) to a controller; wherein the circuitry (110) is configured to receive, over said interface, a target split ratio specifying for the output ports, the respective target loads; and/or said forwarding rules.

8. The network device (100) according to claim 7 wherein the circuitry (110) is configured to transmit a request to the controller, over said interface, requesting the controller to provide the network device with one or more new or updated forwarding rules.

9. The network device (100) according to claim 8, wherein the request contains at least one of:

a notification of the load on the first output port not matching the target load for the first output port;

information on the TCAM utilization and/or the number of rules added locally;

information on a deviation from the target load on each output port;

a list of flows the network device associated with another output port than the first output port.

10. The network device (100) according to any of claims 1 to 9 wherein the modification of the forwarding rules (820) is chosen such that a deviation of the load or predicted load from the target load on the output port is minimized.

11. The network device according to any of claims 1 to 10 wherein in the improving of the match between the load or predicted load and the target load on the output ports a Variable Sized Bin Packing Problem, VSBPP, algorithm is used after removing the flow(s) identified as having the highest load.

12. The network device (100) according to any of claims 1 to 11 wherein the target load per output port (120-1 to 120-N) is determined from the forwarding rules (820) received from a controller.

13. The network device (100) according to any of claims 1 to 12 wherein

the stored forwarding rules (820) include a rule for forwarding packets of sub-aggregated flows of an aggregated flow; and

in a case where the load or predicted load on a first output port (120-N) does not match a target load for the first output port (120-N), exclude at least one of the sub-aggregated flows from the aggregated flow and modify said stored forwarding rules (820) by establishing a second rule associating the at least one of the sub-aggregated flows of the aggregated flow with a second output port (120-1) so as to improve the match between the target load and the load or predicted load on the first output port (120-N).

14. A method (1200) for forwarding traffic in a network device with a plurality of output ports, comprising:

storing forwarding rules including a first rule for forwarding packets of flows of an aggregated flow according to a given flow distribution to the output ports;

in a case where the load on a first output port does not match a target load for the first output port, excluding at least one of the flows from the aggregated flow and modifying said stored forwarding rules by establishing a second rule associating the at least one of the flows of the aggregated flow with a second output port so as to improve the match between the target load and the load on the first output port; and

performing routing according to the stored forwarding rules;

wherein the load on the first output port (120-N, 520-N) is a measured load or a predicted load;

predicting a future load on the output ports (520-1 to 520-N);

in a case where the predicted future load on the first output port (520-N) does not match the target load for the first output port (520-N), identify the at least one of the flows (550-1) with the heaviest future load among the flows (550-1 to 550-N) of the aggregated flow forwarded to the first output port (520-N) according to the flow forwarding rules;

associate said identified flow (550-1) to the second output port (520-1).

## Patentansprüche

1. Netzwerkvorrichtung (100) zum Weiterleiten von Datenverkehr mit einer Vielzahl von Ausgangsports (120-1 bis 120-N, 520-1 bis 520-N), umfassend:

ein Speicherungssystem (101, 530), das Weiterleitungsregeln einschließlich einer ersten Regel zum Weiterleiten von Paketen von Flüssen eines aggregierten Flusses gemäß einer gegebenen Flussverteilung an die Ausgangsports speichert;

eine Schaltlogik (110, 510), die konfiguriert ist zum:

in einem Fall, in dem die Last an einem ersten Ausgangsport (120-N, 520-N) nicht mit einer Ziellast für den ersten Ausgangsport übereinstimmt, Ausschließen mindestens eines der Flüsse aus dem aggregierten Fluss und Ändern der gespeicherten Weiterleitungsregeln durch Erstellen einer zweiten Regel, die den mindestens einen der Flüsse des aggregierten Flusses mit einem zweiten Ausgangsport (120-1, 520-1) verknüpft, um die Übereinstimmung zwischen der Ziellast und der Last an dem ersten Ausgangsport zu verbessern; und Durchführen des Routings gemäß den gespeicherten Weiterleitungsregeln;

wobei die Last an dem ersten Ausgangsport (120-N, 520-N) eine gemessene Last oder eine vorhergesagte Last ist;

wobei die Schaltlogik (110, 510) konfiguriert ist zum:

Vorhersagen einer zukünftigen Last an den Ausgangsports (520-1 bis 520-N);

in einem Fall, in dem die vorhergesagte zukünftige Last an dem ersten Ausgangsport (520-N) nicht mit der Ziellast für den ersten Ausgangsport (520-N) übereinstimmt, Identifizieren des mindestens einen der Flüsse (550-1) mit der höchsten zukünftigen Last unter den Flüssen (550-1 bis 550-N) des aggregierten Flusses, der gemäß den Regeln zum Weiterleiten von Flüssen an den ersten Ausgangsport (520-N) weitergeleitet wird;

Verknüpfen des identifizierten Flusses (550-1) mit dem zweiten Ausgangsport (520-1).

**2.** Netzwerkvorrichtung (500) nach Anspruch 1, wobei die Schaltlogik (510) konfiguriert ist zum:

Beobachten der Last an den Ausgangsports (520-1 bis 520-N);
in einem Fall, in dem die Last an dem ersten Ausgangsport (520-N) nicht mit der Ziellast für den ersten Ausgangsport (520-N) übereinstimmt, Identifizieren des mindestens einen der Flüsse (550-1) des aggregierten Flusses mit der höchsten Last unter den Flüssen (550-1 bis 550-N) des aggregierten Flusses, der gemäß den Regeln zum Weiterleiten von Flüssen an den ersten Ausgangsport (520-N) weitergeleitet wird; und
Verknüpfen des identifizierten Flusses (550-1) mit dem zweiten Ausgangsport (520-1).

**3.** Netzwerkvorrichtung (500) nach einem der Ansprüche 1 bis 2, wobei die Schaltlogik (510) ferner konfiguriert ist zum:

in einem Fall, in dem die Last oder vorhergesagte Last (701) an dem ersten Ausgangsport (750) nicht mit der Ziellast (702) für den ersten Ausgangsport übereinstimmt, Identifizieren eines Satzes (720) der größten Flüsse, die an den ersten Ausgangsport weitergeleitet werden, wobei die Anzahl der Flüsse in dem Satz (720) so gewählt ist, dass, wenn ein weiterer Fluss zu dem Satz (720) von Flüssen hinzugefügt würde, die Gesamtdatenrate der Flüsse des Satzes von Flüssen größer wäre als die Differenz zwischen der Last oder vorhergesagten Last (701) und der Ziellast (702);
Zuweisen der identifizierten Flüsse an einen oder mehrere andere Ausgangsports als den ersten Ausgangsport (750).

**4.** Netzwerkvorrichtung (100) nach einem der Ansprüche 1 bis 3, wobei

die erste Regel und die zweite Regel in einer Weiterleitungstabelle (801) gespeichert sind, wobei
die Weiterleitungstabelle (801) Weiterleitungsregeln speichert, bei denen es sich entweder um Regeln handelt, die einen Eingangsfluss zu einer Gruppentabelle umleiten, oder um Regeln (822), die einen Eingangsfluss mit einem Ausgangsport verknüpfen;
wobei, falls die Weiterleitungsregeln Regeln sind, die einen Eingangsfluss zu einer Gruppentabelle umleiten, jede umleitende Weiterleitungsregel (821) auf einen Satz von Einträgen der Gruppentabelle verweist, der eine Datenverkehrsaufteilung über mehrere Pfade implementiert,

wobei der Eingangsfluss der aggregierte Fluss ist.

**5.** Netzwerkvorrichtung (100) nach Anspruch 4, wobei die Weiterleitungstabelle (801) und die Gruppentabelle in einem Ternary Content Access Memory, TCAM, gespeichert sind.

**6.** Netzwerkvorrichtung (100) nach Anspruch 4 oder 5, wobei beim Zuweisen eines Flusses zu dem zweiten Ausgangsport die zweite Weiterleitungsregel zur Weiterleitungstabelle (801) hinzugefügt wird.

**7.** Netzwerkvorrichtung (100) nach einem der Ansprüche 1 bis 6, umfassend eine Schnittstelle (150) zu einem Controller;
wobei die Schaltlogik (110) konfiguriert ist, um über die Schnittstelle ein Zielaufteilungsverhältnis zu empfangen, das für die Ausgangsports die jeweiligen Ziellasten angibt; und/oder die Weiterleitungsregeln.

**8.** Netzwerkvorrichtung (100) nach Anspruch 7, wobei die Schaltlogik (110) konfiguriert ist, um über die Schnittstelle eine Anforderung an den Controller zu übertragen, die den Controller auffordert, der Netzwerkvorrichtung eine oder mehrere neue oder aktualisierte Weiterleitungsregeln bereitzustellen.

**9.** Netzwerkvorrichtung (100) nach Anspruch 8, wobei die Anforderung mindestens eines enthält von:

einer Benachrichtigung darüber, dass die Last an dem ersten Ausgangsport nicht mit der Ziellast für den ersten Ausgangsport übereinstimmt;
Informationen zur TCAM-Auslastung und/oder zur Anzahl der lokal hinzugefügten Regeln;
Informationen zu einer Abweichung von der Ziellast an jedem Ausgangsport;
einer Liste von Flüssen der Netzwerkvorrichtung, die mit einem anderen Ausgangsport als dem ersten Ausgangsport verknüpft sind.

**10.** Netzwerkvorrichtung (100) nach einem der Ansprüche 1 bis 9, wobei das Ändern der Weiterleitungsregeln (820) so gewählt wird, dass eine Abweichung der Last oder vorhergesagten Last von der Ziellast an dem Ausgangsport minimiert wird.

**11.** Netzwerkvorrichtung nach einem der Ansprüche 1 bis 10, wobei zum Verbessern der Übereinstimmung zwischen der Last oder vorhergesagten Last und der Ziellast an den Ausgangsports ein Variable Sized Bin Packing Problem-Algorithmus (VSBPP-Algorithmus) verwendet wird, nachdem der Fluss bzw. die Flüsse entfernt wurden, der/die als die höchste Last aufweisend identifiziert wurden.

**12.** Netzwerkvorrichtung (100) nach einem der Ansprüche 1 bis 11, wobei die Ziellast pro Ausgangsport (120-1 bis 120-N) aus den von einem Controller empfangenen Weiterleitungsregeln (820) bestimmt wird.

**13.** Netzwerkvorrichtung (100) nach einem der Ansprüche 1 bis 12, wobei

die gespeicherten Weiterleitungsregeln (820) eine Regel zum Weiterleiten von Paketen untergeordneter aggregierter Flüsse eines aggregierten Flusses einschließen; und
in einem Fall, in dem die Last oder vorhergesagte Last an einem ersten Ausgangsport (120-N) nicht mit einer Ziellast für den ersten Ausgangsport (120-N) übereinstimmt, Ausschließen mindestens eines der untergeordneten aggregierten Flüsse aus dem aggregierten Fluss und Ändern der gespeicherten Weiterleitungsregeln (820) durch Erstellen einer zweiten Regel, die den mindestens einen der untergeordneten aggregierten Flüsse des aggregierten Flusses mit einem zweiten Ausgangsport (120-1) verknüpft, um die Übereinstimmung zwischen der Ziellast und der Last an dem ersten Ausgangsport (120-N) zu verbessern;

**14.** Verfahren (1200) zum Weiterleiten von Datenverkehr in einer Netzwerkvorrichtung mit einer Vielzahl von Ausgangsports, umfassend:

Speichern von Weiterleitungsregeln einschließlich einer ersten Regel zum Weiterleiten von Paketen von Flüssen eines aggregierten Flusses gemäß einer gegebenen Flussverteilung an die Ausgangsports;
in einem Fall, in dem die Last an einem ersten Ausgangsport nicht mit einer Ziellast für den ersten Ausgangsport übereinstimmt, Ausschließen mindestens eines der Flüsse aus dem aggregierten Fluss und Ändern der gespeicherten Weiterleitungsregeln durch Erstellen einer zweiten Regel, die den mindestens einen der Flüsse des aggregierten Flusses mit einem zweiten Ausgangsport verknüpft, um die Übereinstimmung zwischen der Ziellast und der Last an dem ersten Ausgangsport zu verbessern; und
Durchführen des Routings gemäß den gespeicherten Weiterleitungsregeln;
wobei die Last an dem ersten Ausgangsport (120-N, 520-N) eine gemessene Last oder eine vorhergesagte Last ist;
Vorhersagen einer zukünftigen Last an den Ausgangsports (520-1 bis 520-N);
in einem Fall, in dem die vorhergesagte zukünftige Last an dem ersten Ausgangsport (520-N) nicht mit der Ziellast für den ersten Ausgangsport (520-N) übereinstimmt, Identifizieren des mindestens einen der Flüsse (550-1) mit der höchsten zukünftigen Last unter den Flüssen (550-1 bis 550-N) des aggregierten Flusses, der gemäß den Regeln zum Weiterleiten von Flüssen an den ersten Ausgangsport (520-N) weitergeleitet wird;
Verknüpfen des identifizierten Flusses (550-1) mit dem zweiten Ausgangsport (520-1).

**Revendications**

**1.** Dispositif de réseau (100) permettant de transférer un trafic avec une pluralité de ports de sortie (120-1 à 120-N, 520-1 à 520-N), comprenant :

un système de stockage (101, 530) stockant des règles de transfert comportant une première règle pour le transfert de paquets de flux d'un flux agrégé selon une distribution de flux donnée vers les ports de sortie ;
une circuiterie (110, 510) configurée pour :

dans un cas où la charge sur un premier port de sortie (120-N, 520-N) ne correspond pas à une charge cible pour le premier port de sortie, exclure au moins l'un parmi les flux du flux agrégé et modifier lesdites règles de transfert stockées en établissant une seconde règle associant l'au moins un parmi les flux du flux agrégé à un second port de sortie (120-1, 520-1) de manière à améliorer la correspondance entre la charge cible et la charge sur le premier port de sortie ; et réaliser un routage selon les règles de transfert stockées ;
dans lequel la charge sur le premier port de sortie (120-N, 520-N) est une charge mesurée ou une charge prévue ;
dans lequel la circuiterie (110, 510) est configurée pour :

prévoir une charge future sur les ports de sortie (520-1 à 520-N) ;
dans un cas où la charge future prévue sur le premier port de sortie (520-N) ne correspond pas à la charge cible pour le premier port de sortie (520-N), identifier l'au moins un parmi les flux (550-1) ayant la charge future la plus élevée parmi les flux (550-1 à 550-N) du flux agrégé transféré vers le premier port de sortie (520-N) selon les règles de transfert de flux ;
associer ledit flux identifié (550-1) au second port de sortie (520-1).

**2.** Dispositif de réseau (500) selon la revendication 1, dans lequel la circuiterie (510) est configurée pour :

observer la charge sur les ports de sortie (520-1 à 520-N) ;

dans un cas où la charge sur le premier port de sortie (520-N) ne correspond pas à la charge cible pour le premier port de sortie (520-N), identifier l'au moins un parmi les flux (550-1) du flux agrégé avec la charge la plus élevée parmi les flux (550-1 à 550-N) du flux agrégé transféré vers le premier port de sortie (520-N) selon les règles de transfert de flux ; et

associer ledit flux identifié (550-1) au second port de sortie (520-1).

**3.** Dispositif de réseau (500) selon l'une quelconque des revendications 1 à 2, dans lequel la circuiterie (510) est en outre configurée pour :

dans un cas où la charge ou la charge prévue (701) sur le premier port de sortie (750) ne correspond pas à la charge cible (702) pour le premier port de sortie, identifier un ensemble (720) des flux les plus importants transférés vers le premier port de sortie, dans lequel le nombre de flux dans l'ensemble (720) est choisi de telle sorte que, si un flux supplémentaire était ajouté à l'ensemble (720) de flux, le débit de données total des flux de l'ensemble de flux serait supérieur à la différence entre la charge ou charge prévue (701) et la charge cible (702) ;

attribuer lesdits flux identifiés à un ou plusieurs ports de sortie autres que le premier port de sortie (750).

**4.** Dispositif de réseau (100) selon l'une quelconque des revendications 1 à 3, dans lequel

la première règle et la seconde règle sont stockées dans une table de transfert (801), dans lequel

la table de transfert (801) stocke des règles de transfert qui sont soit des règles redirigeant un flux d'entrée vers une table de groupe, soit des règles (822) associant un flux d'entrée à un port de sortie ;

dans lequel dans un cas où les règles de transfert sont des règles redirigeant un flux d'entrée vers une table de groupe, chaque règle de transfert redirigeant (821) pointe vers un ensemble d'entrées de la table de groupe qui met en œuvre une répartition de trafic sur de multiples chemins

dans lequel le flux d'entrée est le flux agrégé.

**5.** Dispositif de mise en réseau (100) selon la revendication 4, dans lequel la table de transfert (801) et la table de groupe sont stockées dans une mémoire à accès au contenu ternaire, TCAM.

**6.** Dispositif de réseau (100) selon la revendication 4 ou 5, dans lequel, lors de l'attribution d'un flux au second port de sortie, la seconde règle de transfert est ajoutée à la table de transfert (801).

**7.** Dispositif de réseau (100) selon l'une quelconque des revendications 1 à 6 comprenant une interface (150) avec un dispositif de commande ;

dans lequel la circuiterie (110) est configurée pour recevoir, sur ladite interface, un rapport de répartition cible spécifiant, pour les ports de sortie, les charges cibles respectives ; et/ou lesdites règles de transfert.

**8.** Dispositif de réseau (100) selon la revendication 7, dans lequel la circuiterie (110) est configurée pour transmettre une demande au dispositif de commande, sur ladite interface, demandant au dispositif de commande de fournir au dispositif de réseau une ou plusieurs règles de transfert nouvelles ou mises à jour.

**9.** Dispositif de réseau (100) selon la revendication 8, dans lequel la demande contient au moins l'une parmi :

une notification indiquant que la charge sur le premier port de sortie ne correspond pas à la charge cible pour le premier port de sortie ;

des informations sur l'utilisation de TCAM et/ou le nombre de règles ajoutées localement ;

des informations sur un écart par rapport à la charge cible sur chaque port de sortie ;

une liste de flux que le dispositif de réseau a associés à un port de sortie autre que le premier port de sortie.

**10.** Dispositif de réseau (100) selon l'une quelconque des revendications 1 à 9, dans lequel la modification des règles de transfert (820) est choisie de telle sorte qu'un écart entre la charge ou charge prévue et la charge cible sur le port de sortie est réduit au minimum.

**11.** Dispositif de réseau selon l'une quelconque des revendications 1 à 10, dans lequel, lors de l'amélioration de la correspondance entre la charge ou charge prévue et la charge cible sur les ports de sortie, un algorithme de problème de bin packing à taille variable, VSBPP, est utilisé après avoir supprimé le ou les flux identifiés comme ayant la charge la plus élevée.

**12.** Dispositif de réseau (100) selon l'une quelconque des revendications 1 à 11, dans lequel la charge cible par port de sortie (120-1 à 120-N) est déterminée à partir des règles de transfert (820) reçues en provenance d'un dispositif de commande.

13. Dispositif de réseau (100) selon l'une quelconque des revendications 1 à 12, dans lequel

les règles de transfert stockées (820) comportent une règle pour transférer des paquets de flux sous-agrégés d'un flux agrégé ; et dans un cas où la charge ou charge prévue sur un premier port de sortie (120-N) ne correspond pas à une charge cible pour le premier port de sortie (120-N), exclure au moins l'un parmi les flux sous-agrégés du flux agrégé et modifier lesdites règles de transfert stockées (820) en établissant une seconde règle associant l'au moins un parmi les flux sous-agrégés du flux agrégé à un second port de sortie (120-1) de manière à améliorer la correspondance entre la charge cible et la charge ou charge prévue sur le premier port de sortie (120-N).

14. Procédé (1200) permettant de transférer un trafic dans un dispositif de réseau avec une pluralité de ports de sortie, comprenant :

le stockage de règles de transfert comportant une première règle pour transférer des paquets de flux d'un flux agrégé selon une distribution de flux donnée vers les ports de sortie ; dans un cas où la charge sur un premier port de sortie ne correspond pas à une charge cible pour le premier port de sortie, l'exclusion d'au moins l'un parmi les flux du flux agrégé et la modification desdites règles de transfert stockées en établissant une seconde règle associant l'au moins un parmi les flux du flux agrégé à un second port de sortie de manière à améliorer la correspondance entre la charge cible et la charge sur le premier port de sortie ; et la réalisation d'un routage selon les règles de transfert stockées ; dans lequel la charge sur le premier port de sortie (120-N, 520-N) est une charge mesurée ou une charge prévue ; la prévision d'une charge future sur les ports de sortie (520-1 à 520-N) ; dans un cas où la charge future prévue sur le premier port de sortie (520-N) ne correspond pas à la charge cible pour le premier port de sortie (520-N), identifier l'au moins un parmi les flux (550-1) ayant la charge future la plus élevée parmi les flux (550-1 à 550-N) du flux agrégé transféré vers le premier port de sortie (520-N) selon les règles de transfert de flux ; l'association dudit flux identifié (550-1) au second port de sortie (520-1).

## Fig. 1

SDN / PCE Controller $\longrightarrow$

### Switch

| | Forwarding table (node 0) | | | Group table (node 0) | | | |
|---|---|---|---|---|---|---|---|
| dest. address $\longrightarrow$ | **Match** | **Action** | group ID $\longrightarrow$ | **Group Id** | **Hash** | **Next-Hop** | next-hop $\longrightarrow$ |
| demand $D_1$ | 56.78.91.8 | Apply Group 1 | | 1 | 0 | 56.78.91.1 | } 1/3 |
| demand $D_2$ | 98.76.54.3 | Forward to 56.78.91.2 | | 1 | 1 | 56.78.91.2 | } 2/3 split ratios for $D_1$ |
| | ... | ... | | 1 | 2 | 56.78.91.2 | |
| | | | | ... | ... | .. | |

## Fig. 2

CSG   ASG   ASG   RSG

|  | target ratio | observed ratio (at time t) |
|---|---|---|
| S-list 1: 1, 2, 5 | 10% | 20% |
| S-list 2: 1, 3, 6 | 40% | 10% |
| S-list 3: 1, 4, 7 | 50% | 70% |

Fig. 3

**Fig. 4A**

**Fig. 4B**

100

Storage

101 — Forwarding rules with addidional second rule

Establish new rule

140: Load monitoring

120-1

120-N

150: Interface

130: Flow distribution

153n

152n

110

Input data

151

Fig. 5A

**Fig. 5B**

**Fig. 6**

**Fig. 7**

701: Measured/predicted load on port 750

Port 750

730

702: Target load for port 750

710

Sent to other ports

720

EP 3 977 690 B1

**Fig. 8**

820:
forwarding rules

| 821 |
| 822 |
| ⋮ |

Group table

801
Forwarding table

Output ports

EP 3 977 690 B1

EP 3 977 690 B1

**Fig. 9**

Fig. 10

# Typical network setting

Host A

TCP 1

IP1

Host B

TCP 2          UDP 2

IP2

Local Area
Network

Enterpris
e site A

Local Area
Network

In this example:
MPLS tunnels 1 & 2
are used to transport
the flow composed of all sub-flows
transiting fro site 1 to B

Enterprise
site B

Router  A

Load
balancer

Flow 1

Tunnel 1

Tunnel 2

Flow 2

Tunnel 3

Tunnel 4

Wide Area Network

Router  B

Tunnel 1

Tunnel 2

Flow 1

Tunnel 1

Tunnel 2

Flow 2

Load
balancer

EP 3 977 690 B1

**Fig. 11**

Scale — 1101

LP Solver — 1102

Oracle — 1103

Rounding — 1104

1105 — Iterate

**Fig. 12**

1200

switch

S1: Port monitoring

S2: Activation of traffic analysis

S3: Heavy hitter detection

ok

S4: Local Heavy hitters scheduling

not ok

S5. Request help from controller

controller

S6: Global optimization

**REFERENCES CITED IN THE DESCRIPTION**

**Patent documents cited in the description**

- US 2009193105 A1

- US 2012287789 A1